# EUROPÄISCHE PATENTSCHRIFT

(11) **EP 1 512 111 B1**
(45) Veröffentlichungstag und Bekanntmachung des Hinweises auf die Patenterteilung: **06.06.2007**
(21) Anmeldenummer: 03759946.1
(22) Anmeldetag: 12.06.2003
(51) Int. Cl.: G06K 7/00

(54) **CHIPKARTENLESER IM PC KARTENFORMAT**
CHIPCARD READER IN PC-CARD FORMAT
LECTEUR DE CARTE A PUCE EN FORMAT CARTE PC

(30) Priorität: 13.06.2002 DE 20209185 U
(43) Veröffentlichungstag der Anmeldung: 09.03.2005
(73) Patentinhaber: STOCKO Contact GmbH & Co. KG, 42327 Wuppertal (DE)
(72) Erfinder: KLATT, Dieter, 42489 Wülfrath (DE)
(74) Vertreter: Stenger, Watzke & Ring
(86) Internationale Anmeldenummer: PCT/EP2003/006186
(87) Internationale Veröffentlichungsnummer: WO 2003/107254

(56) Entgegenhaltungen:
- EP-A- 0 858 046
- EP-A- 0 866 413
- EP-A- 0 924 640
- EP-A- 1 056 032
- WO-A-00/04486
- DE-A- 4 310 517

## Beschreibung

Die Erfindung betrifft eine Kontaktiereinheit für ein kartenförmiges Trägerelement elektronischer Baugruppen, insbesondere für ISO 7816 Chipkarten mit einem steckkartenförmigen Gehäuse, das eine Basisplatte und eine in Querrichtung deckungsgleiche Abdeckplatte aufweist, zwischen denen ein an einer Stirnseite des Gehäuses mündender schlitzartiger Einschubkanal für die Aufnahme der Chipkarte ausgebildet ist, und das an der dieser Stirnseite gegenüberliegenden Stirnseite mit einer Steckverbinderleister, insbesondere nach PCMCIA-Norm, versehen ist, und mit einer parallel zum Einschubkanal im Gehäuse angeordneten Leiterplatte, die elektrisch mit der Steckverbinderleiste verbunden ist und an ihrer Oberfläche mit einem Kontaktfeld für die Kontaktierung der Chipkarte versehen ist, wobei ausschließlich die Basisplatte um einen flachen, unterlippenartigen Ansatz verlängert ist, der sich in einen in Einschubrichtung der Chipkarte vor der Mündung des Einschubkanals liegenden Bereich erstreckt.

Chipkartenleser sind beispielsweise in dem deutschen Gebrauchsmuster DE 298 11 425 U1 beschrieben. Sie sind geeignet über die Steckverbinderleiste, insbesondere nach PCMCIA-Norm, an Datenverarbeitungssysteme, beispielsweise Notebooks, angeschlossen zu werden und dienen dort der Auswertung von Daten oder der Durchführung von Anwendungen, wie beispielsweise der Öffnung der Zugangsberechtigung zu Datennetzen, der Ausführung von Homebanking oder auch zur Speichererweiterung, Telefonnutzung und dergleichen. Eine weitere Anwendung derartiger Chipkartenleser ist als Common Interface in Verbindung mit dem digitalen Fernsehen gegeben. Für alle Notebook-Applikationen wird eine kurze Version von Lesegeräten, insbesondere nach PCMCIA-Typ II, eingesetzt, die im Einschubschacht des Notebooks in vollem Umfange versenkbar ist, ohne daß die Mobilität und Handhabung störende herausragende Teile im eingesetzten Zustand vorhanden sind. Dagegen wird beispielsweise bei Digital- und/oder Pay-TV-Applikationen in sogenannten Set-Top-Boxen eine verlängerte Version der Lesegeräte verwendet, bei denen das Gehäuse im hinteren Bereich, also an der der Steckverbinderleiste gegenüberliegenden Stirnseite, mit einer Verlängerung versehen ist, die sowohl dazu dient, die einzusetzende Chipkarte zu führen als auch die Handhabung des Lesegeräts zu erleichtern. Der Verlängerungsbereich stellt eine Art vorgelagerter Führung für die Chipkarte dar und stabilisiert den Chipkartenleser mechanisch für die stark beanspruchenden Betriebsbedingungen auf dem Consumermarkt. Ein Einsatz solcher Lesegeräte mit in der Betriebsstellung aus dem Modulaufnahmeschlitz des Computers herausragenden Erweiterung verbietet sich beispielsweise an Notebooks, da dort die Gefahr besteht, daß in der mobilen Handhabung die Kontaktiersicherheit beeinträchtigt wird und Transportprobleme auftreten.

Nachteilig bei den bisher bekannten Ausgestaltungen von Kontaktiereinheiten der eingangs genannten ist, daß diese nur eine unzureichende Führung der Chipkarte beim Einsetzen bzw. beim Entnehmen der Chipkarte aus einer Kontaktiereinheit bereitstellen, die mitunter dazu führt, daß die Chipkarte beim Einsetzen bzw. Entnehmen beschädigt und/oder nicht richtig kontaktiert wird. Darüber hinaus ist die Entnahme derartiger Kontaktiereinheiten aus einem PCMCIA-Schacht, insbesondere einem tiefliegenden PCMCIA-Schacht für Anwendungen im Bereich von Digital- und/oder Pay-TV-Anwendungen, erschwert.

Gattungsgemäße Kontaktiereinhetten sind aus der EP-A-1 056 032 und der WO-A-00/04486 bekannt geworden (siehe Präambel des Anspruchs 1). Allerdings sind diese vorbekannten Kontaktiereinheiten wenig einfach zu handhaben.

Der Erfindung liegt in Anbetracht dieses Standes der Technik die **Aufgabe** zugrunde, eine Kontaktiereinheit der eingangs genannten Art dergestalt zu verbessern, daß eine sichere, insbesondere beschädigungsfreie Einführung einer Chipkarte in die Kontaktiereinheit als auch eine verbesserte Entnahme der Kontaktiereinheit aus einem PCMCIA-Schacht, insbesondere einem tiefliegenden PCMCIA-Schacht für Anwendungen im Bereich von Digital- und/oder Pay-TV-Anwendungen, ermöglicht ist.

Die Aufgabe ist erfindungsgemäß an einer Kontaktiereinheit der eingangs genannten Art, die eine Kurzversion ohne die Gehäuseerweiterurig darstellt, dadurch **gelöst,** daß der Ansatz in Querrichtung des Gehäuses bezogen auf die Breite der Basisplatte eine geringere Breite aufweist und daß der Ansatz wenigstens eine Entnahmehilfe aufweist, wobei die Entnahmehhilfe ein seitens des Ansatzes ausgeformter Nocken ist, welcher seitlich des Ansatzes ausgebildet ist.

Der flache, unterlippenartige Ansatz der Basisplatte übernimmt die vertikale Einführung der Chipkarte in die Kontaktiereinheit und stellt so sicher, daß die Chipkarte sicher und beschädigungsfrei in die Kontaktiereinheit Einführbar ist. Ferner ist die Kontaktiereinheit durch den Ansatz einfacher aus einem entsprechenden PCMCIA-Schacht entnehmbar.

Der Ansatz weist in Querrichtung des Gehäuses bezogen auf die Breite der Basisplatte eine geringere Breite auf, vorzugsweise derart, daß der Ansatz schmaler ist als der PCMClA- und/oder der ISO 7816-Standard ist, was einer Breite des Ansatzes kleiner gleich 54,00 mm entspricht.

Der Ansatz weist wenigstens eine Entnahmehilfe auf, welche eine verbesserte Handhabung der Kontaktiereinheit bei der Entnahme aus einem PCMCIA-Schacht ermöglicht. In einer bevorzugten Ausgestaltung der Erfindung ist die Entnahmehilfe ein seitens des Ansatzes ausgeformter Nocken, welcher seitlich des Ansatzes ausgebildet ist.

In einer weiteren vorteilhaften Ausgestaltung der Erfindung ist der Ansatz aus Kunststoff und/oder Metall.

Um der Notwendigkeit Rechnung zu tragen, je nach Einsatzbereich kurzbauende Lesegeräte für Notebooks und dergleichen mobile Einsätze zur Verfügung stellen zu können und die Langversion mit Erweiterungsbereich im stationären Einsatz, zum Beispiel in Digital- und/oder Pay-TV-Applikationen verwenden zu können und dabei die zur Erfüllung dieser Anforderungen erheblichen Erschwernisse für die Herstellung von Kontaktiereinheiten, die gegeben sind da für die unterschiedlichen Geräte differierende Herstellungsverfahren und Maschinen angewendet werden müssen und darüber hinaus die gesamte Logistik und Lagerhaltung verkompliziert wird, zu beseitigen, wird in einer weiteren vorteilhaften Ausgestaltung der Erfindung vorgeschlagen, daß der flache, unterlippenartige Ansatz mit der Basisplatte über eine Sollbruchlinie verbunden ist. Vorteilhafterweise lassen sich so aus einem Herstellungsprozeß heraus sowohl eine Kurzversion als auch eine Langversion der Kontaktiereinheit produzieren. Durch die Kombination der an sich bekannten Kurzversion des Chipkartenlesegeräts mit einem über die Sollbruchlinie wahlweise abtrennbaren Ansatz einer dem jeweiligen . Anwendungszweck entsprechenden Formgebung, also unterlippenartig oder U-förmig oder kastenförmig, wird die Möglichkeit gegeben, in einem einzigen Herstellungsprozeß entweder die Kurzversion (für den Notebook-Einsatz) oder die Extendedversion (für das Digitale TV an Set Top Boxen) herzustellen, indem einfach von der Abtrennmöglichkeit des Extendedbereichs Gebrauch gemacht wird (für Notebook-Applikationen) oder nicht (für digitales TV).

Vorzugsweise ist die Verbindung der Basisplatte mit der Abdeckplatte im Bereich der Steckverbinderleiste vorgenommen und kann beispielsweise über Schweißlaschen, Ultraschallverschweißung, Verklebung oder Verschraubung erfolgen. Dabei ist vorzugsweise der Einschubkanal über seine gesamte Länge in Einschubrichtung der Chipkarte beidseitig durchgehend offen und ist die Basisplatte mit der Abdeckplatte ausschließlich im Bereich der Steckverbinderleiste derart verbunden, daß zwischen der Basisplatte und der Abdeckplatte eine Vorspannung vorgesehen ist. Auf diese Weise wird mit dem Einschieben der Chipkarte eine geringe Verschwenkbewegung zwischen Basisplatte und Abdeckplatte gegen die Wirkung der Rückstellkraft vorgenommen. Diese Ausführungsform bietet sowohl in der Kurzversion als auch in der Langversion den Vorteil, daß sich die Chipkarte im Lesegerät beim Einschieben in den Einschubkanal klemmend halten läßt, wobei eine hohe Formstabilität der Kontaktiereinheit und Kompensation fertigungsbedingter Toleranzen erzielt wird. Bei den bisher bekannten Langversionen von Kontakiereinheiten ist diese vorteilhafte Maßnahme nicht vornehmbar.

Gemäß einer weiteren Ausgestaltung der Erfindung kann es vorteilhaft sein, den Ansatz mit der Basisplatte über eine oder mehrere Sollbruchstellen zu verbinden. Auch kann es zweckmäßig sein, den durch den Ansatz gebildeten Erweiterungsbereich aus Teilsegmenten aufzubauen, die je nach Formgebung herausgetrennt werden können.

Gemäß einer weiteren Ausgestaltung der Erfindung ist der Ansatz mit Durchbrüchen und/oder Rastelementen versehen, die auch vorgesehen sein können, eine zusätzliche oder nachträgliche Aufnahme von weiteren elektrischen Modulen in der Langversion zu ermöglichen, wobei eine elektrische Verbindung zur Leiterplatte vorgesehen ist. Solche Module können Speichererweiterungen, Adapter für kleinere Speicherkarten (z. B. SIM Karte, Mulitmedia Card, Compact Flash Card, Smart Media Card usw.), Fax/Modem, ISDN, ADSL oder LWL Übertragung sowie Anschlußmöglichkeiten für Eingabegeräte, z. B. eine Tastatur oder biometrische Eingabegeräte beinhalten.

Weitere Einzelheiten, Merkmale und Vorteile des Gegenstandes der Erfindung ergeben sich aus der nachfolgenden Beschreibung der zugehörigen Zeichnung, in der verschiedene Ausführungsformen einer erfindungsgemäßen Kontaktiereinheit schematisch dargestellt sind. In der Zeichnung zeigt:
- Fig. 1: eine perspektivische Darstellung einer Kontaktiereinheit;
- Fig. 2: eine weitere perspektivische Darstellung einer erfindungsgemäßen Kontaktiereinheit;
- Fig. 3: eine weitere perspektivische Darstellung einer Kontaktiereinheit als Langversion;
- Fig. 4: eine perspektivische Darstellung einer geänderten Kontaktiereinheit mit U-förmigem Ansatz;
- Fig. 5: eine geänderte Ausführungsform der Langversion einer Kontaktiereinheit in perspektivischer Darstellung;
- Fig. 6: eine geänderte Ausführungsform in perspektivischer Darstellung und
- Fig.7: ein zusätzliches elektrisches Modul in perspektivischer Darstellung, welches mit einer entsprechend vorbereiteten Langversion der Kontaktiereinheit einsetzbar ist.

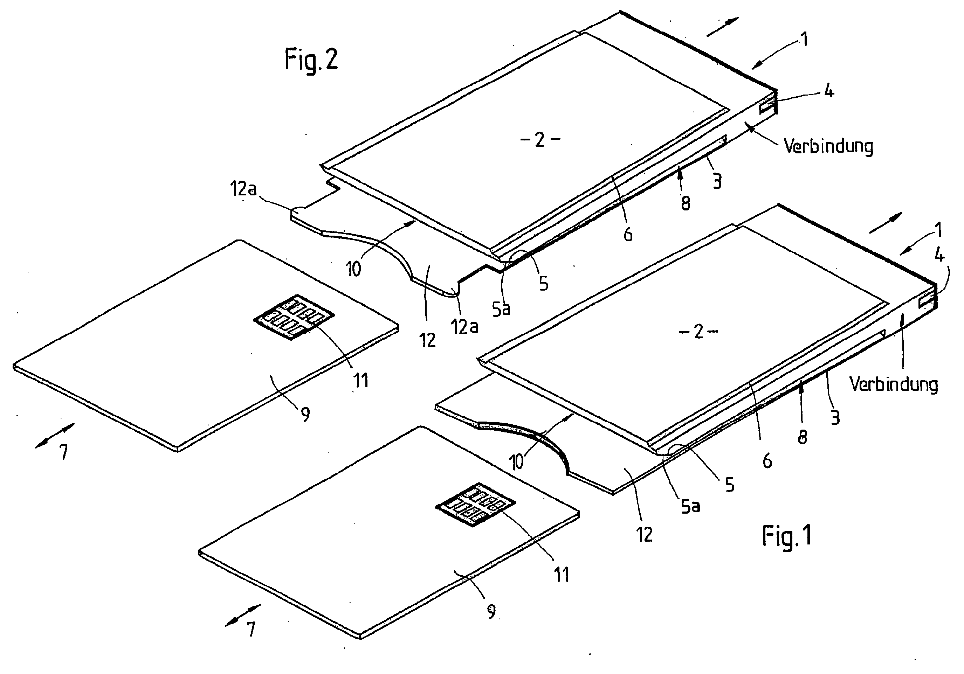

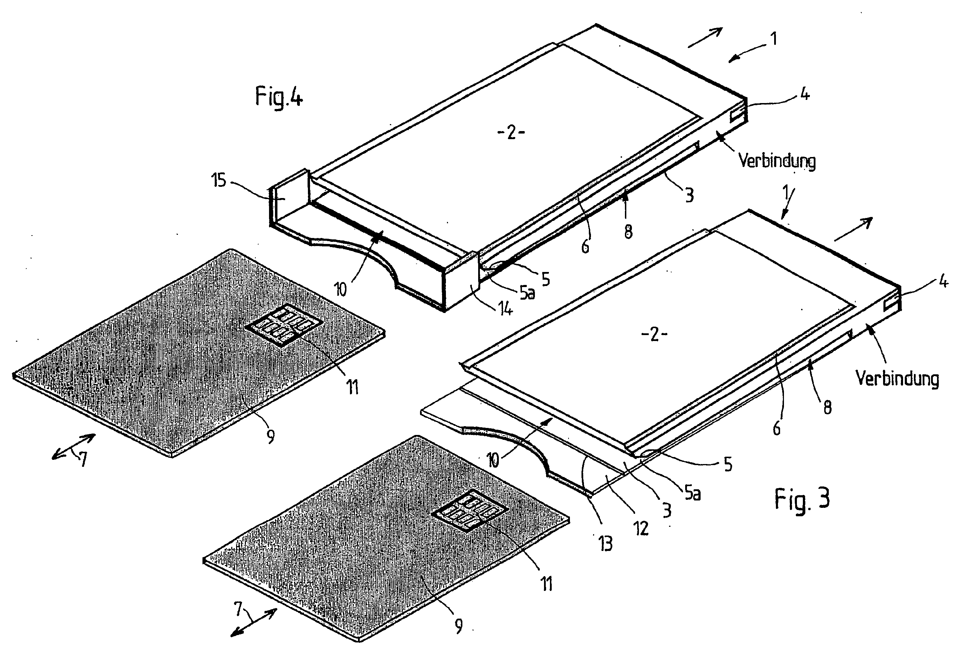

Die in Fig. 1 und Fig. 2 dargestellten Beispiele zeigen eine als Chipkartenleser ausgebildete Kontaktiereinheit 1, die vorgesehen ist, über eine normgemäße PCMCIA-Schnittstelle mit einer Set-Top-Box für digitales Fernsehen (nicht dargestellt) kontaktiert zu werden. Die Kontaktiereinheit 1 besteht aus einem zweischaligen Außengehäuse 2 mit einer Basisplatte 3, einem PCMCIA-Anschlußfeld in Form einer Steckverbinderleiste 4 mit 68 Polen an dem in Einschubrichtung in die Set-Top-Box gemäß Pfeil vorderen Ende, mit einer oberen und einer unteren Einschubführung 5, 5a am gegenüberliegenden Ende für die Einführung einer ISO 7816 Chipkarte 9 und einer parallel mit Abstand zur Basisplatte 3 sich erstreckenden Abdeckplatte 6, welche mit der Basisplatte 3 im Bereich der Steckverbinderleiste 4 (siehe Pfeil) starr verbunden ist. Im Inneren des Gehäuses 2 ist mit Abstand parallel zur Basisplatte eine in der Zeichnung nicht erkennbare Leiterplatte angeordnet derart, daß dazwischen ein Einschubkanal 8 für die ISO 7816 Chipkarte 9 gebildet wird, die über einen zwischen den Einschubführungen 5, 5a verlaufenden Einschubschlitz 10 in die Kontaktiereinheit 1 einschiebbar ist. Die Chipkarte 9 läßt sich in Richtung des in Fig. 1 und Fig. 2 gezeigten Doppelpfeils 7 in die Kontaktiereinheit 1 einschieben und aus dieser wieder herausziehen, wobei sich über das auf der Oberfläche angeordnete Chipfeld 11 der Chipkarte 9 und ein inneres Kontaktfeld (nicht erkennbar) auf der Unterseite der Leiterplatte eine Kontaktierung vornehmen läßt, die eine Verarbeitung der Chipkarte 9 ermöglicht, wenn die Kontaktiereinheit 1 in den Einschubschlitz der Set Top Box eingesetzt und mit dessen PCMCIA-Schnittstelle über die Steckverbindedeiste 4 verbunden ist.

Aus der Zeichnung ist erkennbar, daß der Einschubkanal 8 über seine gesamte Länge in Einschubrichtung der Chipkarte beidseitig durchgehend offen ist und daß die Basisplatte 3 mit der Abdeckplatte 6 ausschließlich im Bereich der Steckverbinderleiste (Verbindungsbereich durch Pfeil gekennzeichnet) verbunden ist. Die Verbindung ist dabei derart ausgestaltet, daß zwischen der Basisplatte 3 und der Abdeckplatte 6 eine Vorspannung vorgesehen ist, die dazu führt, daß bei nicht eingeschobener Chipkarte 9 der Einschubkanal 8 sich zum Einschubschlitz 10 hin verengt. Wird nun die Chipkarte 9 in den Einschubkanal 8 eingeschoben erzwingt sie gegen die Wirkung der Vorspannung eine geringe Verschwenkbewegung der Abdeckplatte 6 nach oben, so daß eine Klemmfunktion für die Chipkarte 9 erzielt ist.

Die Basisplatte 3 der Kontaktiereinheit 1 ist durch einen flachen, unterlippenartigen Ansatz 12 verlängert, der sich in einen in Einschubrichtung der Chipkarte 9 vor der Mündung des Einschubkanals 8 liegenden Bereich erstreckt. Dabei weist der Ansatz 12 in Querrichtung des Gehäuses 2 bezogen auf die Breite der Basisplatte 3 gemäß dem Stand der Technik die gleiche (Fig. 1) oder erfindungsgemäß eine geringere (Fig. 2) Breite auf. Der flache, unterlippenartige Ansatz 12 der Basisplatte 3 bildet so im Berech vor der Mündung des Einschubkanals 8 einen Extendedbereich, der die vertikale Einführung der Chipkarte 9 in den Einschubkanal 8 übernimmt und so eine sichere und insbesondere für die Chipkarte 9 beschädigungsfreie Chipkarteneinführung ermöglicht. Darüber hinaus ist durch den Ansatz 12 eine vereinfachte und verbesserte Entnahme der Kontaktiereinheit 1 aus einem tiefliegenden, insbesondere bei Set-Top-Boxen für digitales Fernsehen gebräuchlichen PCMCIA-Schacht ermöglicht ist. Zur weiteren Verbesserung der Handhabung der Kontaktiereinheit 1 weist der Ansatz 12 der Kontaktiereinheit 1 gemäß Fig. 2 an seinem äußersten Ende zwei seitlich angeordnete nockenartige Ausformungen auf, welche als Entnahmehilfe 12a für die Kontaktiereinheit 1 aus einer Set-Top-Box für digitales Fernsehen dienen.

Das in Fig. 3 dargestellte Beispiel zeigt eine als Chipkartenleser ausgebildete Kontaktiereinheit 1, die vorgesehen ist, über eine normgemäße PCMCIA-Schnittstelle mit einer Set-Top-Box für digitales Fernsehen (nicht dargestellt) kontaktiert zu werden. Die Kontaktiereinheit 1 besteht aus einem zweischaligen Außengehäuse 2 mit einer Basisplatte 3, einem PCMCIA-Anschlußfeld in Form einer Steckverbinderleiste 4 mit 68 Polen an dem in Einschubrichtung in die Set-Top-Box gemäß Pfeil vorderen Ende, mit einer oberen und einer unteren Einschubführung 5, 5a am gegenüberliegenden Ende für die Einführung einer ISO 7816 Chipkarte 9 und einer parallel mit Abstand zur Basisplatte 3 sich erstreckenden Abdeckplatte 6, welche mit der Basisplatte 3 im Bereich der Steckverbinderleiste 4 (siehe Pfeil) starr verbunden ist. Im Inneren des Gehäuses 2 ist mit Abstand parallel zur Basisplatte eine in der Zeichnung nicht erkennbare Leiterplatte angeordnet derart, daß dazwischen ein Einschubkanal 8 für die ISO 7816 Chipkarte 9 gebildet wird, die über einen zwischen den Einschubführungen 5, 5a verlaufenden Einschubschlitz 10 in die Kontaktiereinheit 1 einschiebbar ist. Die Chipkarte 9 läßt sich in Richtung des in Fig. 3 gezeigten Doppelpfeils 7 in die Kontaktiereinheit 1 einschieben und aus dieser wieder herausziehen, wobei sich über das auf der Oberfläche angeordnete Chipfeld 11 der Chipkarte 9 und ein inneres Kontaktfeld (nicht erkennbar) auf der Unterseite der Leiterplatte eine Kontaktierung vornehmen läßt, die eine Verarbeitung der Chipkarte 9 ermöglicht, wenn die Kontaktiereinheit 1 in den Einschubschlitz der Set Top Box eingesetzt und mit dessen PCMCIA-Schnittstelle über die Steckverbinderleiste 4 verbunden ist.

Aus der Zeichnung ist erkennbar, daß der Einschubkanal 8 über seine gesamte Länge in Einschubrichtung der Chipkarte beidseitig durchgehend offen ist und daß die Basisplatte 3 mit der Abdeckplatte 6 ausschließlich im Bereich der Steckverbinderleiste (Verbindungsbereich durch Pfeil gekennzeichnet) verbunden ist. Die Verbindung ist dabei derart ausgestaltet, daß zwischen der Basisplatte 3 und der Abdeckplatte 6 eine Vorspannung vorgesehen ist, die dazu führt, daß bei nicht eingeschobener Chipkarte 9 der Einschubkanal 8 sich zum Einschubschlitz 10 hin verengt. Wird nun die Chipkarte 9 in den Einschubkanal 8 eingeschoben erzwingt sie gegen die Wirkung der Vorspannung eine geringe Verschwenkbewegung der Abdeckplatte 6 nach oben, so daß eine Klemmfunktion für die Chipkarte 9 erzielt ist.

Die Basisplatte 3 .der Kontaktiereinheit 1 ist durch einen flachen, unterlippenartigen Ansatz 12 verlängert, der mit der Basisplatte 3 über eine Sollbruchlinie 13 verbunden ist. Es ist erkennbar, daß durch diese Maßnahme aus einem einzigen Herstellungsprozeß heraus sowohl eine Kurzversion der Kontaktiereinheit als auch eine Langversion der Kontaktiereinheit 1 herstellbar ist, indem entweder der Ansatz 12 unter Nutzung der Sollbruchlinie 13 zur Herstellung einer Kurzversion weggebrochen wird oder zur Herstellung einer Langversion belassen wird. Dabei kann zur Verbesserung der Führung für die Chipkarte 9 gemäß Fig. 4 der Zeichnung eine U-förmige Ausbildung des Ansatzes vorgenommen werden, indem der Ansatz 12 mit seitlichen Führungsstegen 14, 15 versehen wird. Es wird darauf hingewiesen, daß die seitlichen Führungsstege 14, 15 ausschließlich mit dem Ansatz 12 verbunden sind und mit diesem durch Wegbrechen zur Herstellung einer Kurzversion entfernbar sind.

Die Beschreibung verdeutlicht, daß die erläuterte Gehäusekonzeption die Möglichkeit bietet, einen in Extendedversion hergestellten Chipkartenleser, wie er für digitales Fernsehen unter anderem für Set-Top-Boxen Verwendung findet, durch Abtrennen des Extendedbereichs, respektive Ansatzes 12, gegebenenfalls gemeinsam mit den seitlichen Führungsstegen 14, 15 zur Kurzversion umzugestalten, die insbesondere für Notebook-Applikationen verwendet werden kann.

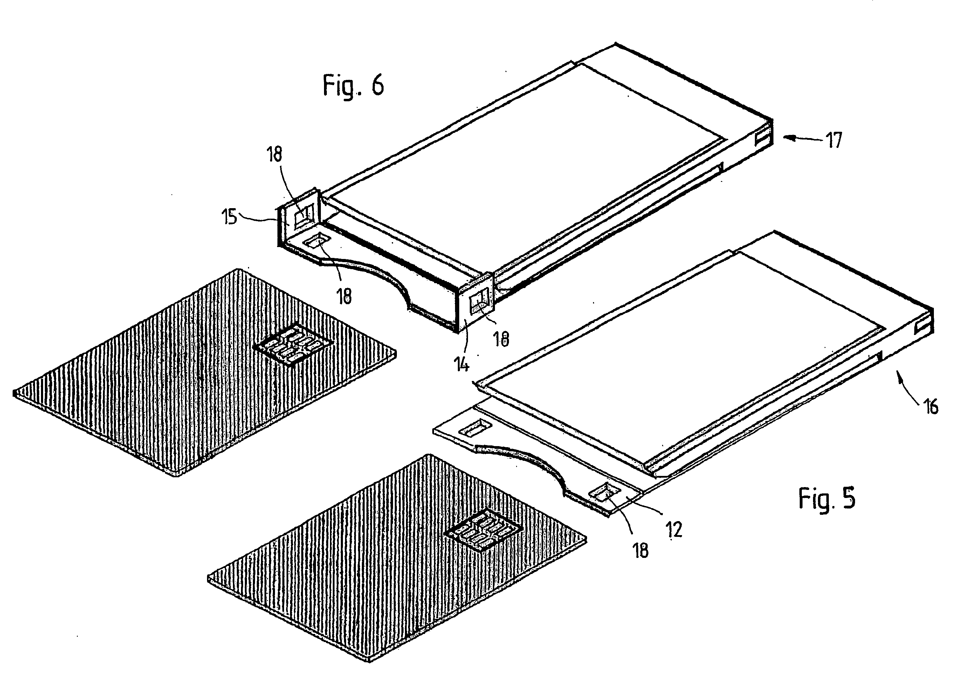

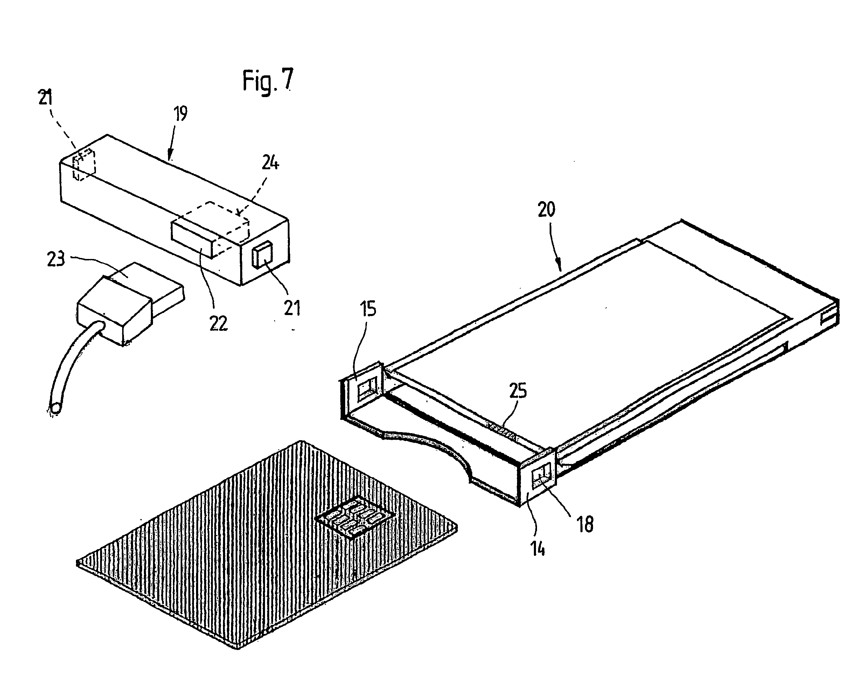

Die in Fig. 5 und 6 dargestellte Ausführungsform eines Chipkartenlesers 16 bzw. 17 unterscheidet sich von den vorbeschriebenen der Fig. 1 und 2 dadurch, daß der Ansatz 12 und/oder die seitlichen Führungsstege 14, 15 mit Durchbrüchen 18 versehen sind, in die Rastelemente eingreifen können, die vorgesehen sein können, eine zusätzliche Aufnahme von weiteren elektrischen Modulen in der Langversion zu ermöglichen.

Ein derartiges Modul 19 ist in Fig. 7 der Zeichnung perspektivisch schematisch dargestellt. Das im wesentlichen prismatische Modul 19 weist Abmessungen auf, die dem freien Innenraum des Ansatzes 12 mit seitlichen Führungsstegen 14, 15 entsprechen und ist mit Rastvorsprüngen 21 seitlich versehen. Das Modul 19 trägt ein Steckbuchsenteil 22 zum Anschluß eines Steckers 23 und weist vorderseitig eine Kontaktfläche 24 auf, die mit einer korrespondierenden Kontaktfläche 25 des zugehörigen Chipkartenlesers 20 zusammenwirkt, wenn das Modul 19 eingesetzt und mit den Durchbrüchen 18 der seitlichen Führungsstege 14, 15 verrastet ist.

Die in der Zeichnung dargestellten Ausführungsbeispiele dienen lediglich der Erläuterung der Erfindung und sind für diese nicht beschränkend.

### Bezugszeichenliste

- 1: Kontaktiereinheit
- 2: Außengehäuse
- 3: Basisplatte
- 4: Steckverbinderleiste
- 5: Einschubführung
- 5a: Einschubführung
- 6: Abdeckplatte
- 7: Doppelpfeil
- 8: Einschubkanal
- 9: Chipkarte
- 10: Einschubschlitz
- 11: Chipfeld
- 12: Ansatz
- 12a: Entnahmehilfe
- 13: Sollbruchlinie
- 14: Führungssteg
- 15: Führungssteg
- 16: Chipkartenleser
- 17: Chipkartenleser
- 18: Durchbruch
- 19: Modul
- 20: Chipkartenleser
- 21: Rastvorsprung
- 22: Steckbuchsenteil
- 23: Stecker
- 24: Kontaktfläche
- 25: Kontaktfläche

## Patentansprüche

1. Kontaktiereinheit für ein kartenförmiges Trägerelement elektronischer Baugruppen, insbesondere für ISO 7816 Chipkarten (9), mit einem steckkartenförmigen Gehäuse (2), das eine Basisplatte (3) und eine in Querrichtung deckungsgleiche Abdeckplatte (6) aufweist, zwischen denen ein an einer Stirnseite des,Gehäuses (2) mündender schlitzartiger Einschubkanal (8) für die Aufnahme des Trägerelements (9) ausgebildet ist, und das an der dieser Stirnseite gegenüberliegenden Stirnseite mit einer Steckverbinderleiste (4), nach PCMCIA-Norm, versehen ist, und mit einer parallel zum Einschubkanal (8) im Gehäuse (2) angeordneten Leiterplatte, die elektrisch mit der Steckverbinderleiste (4) verbunden ist und an ihrer Oberfläche mit einem Kontaktfeld für die Kontaktierung des Trägerelements (9) versehen ist, wobei ausschließlich die Basisplatte (3) um einen flachen, unterlippenartigen Ansatz (12) verlängert ist, der sich in einen in Einschubrichtung des Trägerelements (9) vor der Mündung des Einschubkanals (8) liegenden Bereich erstreckt,
**dadurch gekennzeichnet,**
**daß** der Ansatz (12) in Querrichtung des Gehäuses (2) bezogen auf die Breite der Basisplatte (3) eine geringere Breite aufweist und daß der Ansatz (12) wenigstens eine Entnahmehilfe (12a) aufweist, wobei die Entnahmehilfe (12a) ein seitens des Ansatzes (12) ausgeformter Nocken ist, welcher seitlich des Ansatzes (12) ausgebildet ist.

2. Kontaktiereinheit nach Anspruch 1, **dadurch gekennzeichnet, daß** der Ansatz (12) aus Kunststoff und/oder Metall ist.

3. Kontaktiereinheit nach Anspruch 1 oder 2, **dadurch gekennzeichnet, daß** die Verbindung der Basisplatte (3) mit der Abdeckplatte (6) im Bereich der Steckverbinderleiste (4) vorgenommen ist.

4. Kontaktiereinheit nach einem der Ansprüche 1 bis 3, **dadurch gekennzeichnet**, daβ-der Einschubkanal (8) über seine gesamte Länge in Einschubrichtung des Trägerelements (9) beidseitig durchgehend offen ist und daß die Basisplatte (3) mit der Abdeckplatte (6) ausschließlich im Bereich der Steckverbinderleiste (4) derart verbunden ist, daß zwischen der Basisplatte (3) und der Abdeckplatte (6) eine Vorspannung gegeben ist.

5. Kontaktiereinheit nach einem der Ansprüche 1 bis 4, **dadurch gekennzeichnet, daß** der Ansatz (12) mit der Basisplatte (3) über eine Sollbruchlinie (13) verbunden ist.

6. Kontaktiereinheit nach einem der Ansprüche 1 bis 5, **dadurch gekennzeichnet, daß** der Ansatz (12) mit der Basisplatte (3) über eine oder mehrere Sollbruchstellen verbunden ist.

7. Kontaktiereinheit nach einem der Ansprüche 1 bis 6, **dadurch gekennzeichnet, daß** der durch den Ansatz (12) gebildete Erweiterungsbereich aus Teilsegmenten aufgebaut ist, die separat von der Basisplatte abtrennbar sind.

8. Kontaktiereinheit nach einem der Ansprüche 1 bis 7, **dadurch gekennzeichnet, daß** der Ansatz (12) mit Durchbrüchen (18) und/oder Rastelementen versehen ist.

9. Kontaktiereinheit nach Anspruch 8, **gekennzeichnet durch** eine zusätzliche Aufnahme eines oder mehrerer elektrischer Module (19), wobei eine elektrische Verbindung (24/25) zur Leiterplatte vorgesehen ist.

## Claims

1. A contacting unit for a card-shaped carrier element of electronic assemblies, particularly for ISO 7816 chip cards (9), including a plug-in card-shaped housing (2), which includes a base plate (3) and a cover plate (6) coterminous with it in the transverse direction, between which is defined a slot-like insertion passage (8), open at an end face of the housing (2), for receiving the carrier element (9), and which is provided on the end face opposite to this end face with a plug connector bar (4) in accordance with the PCMCIA Standard and with a printed circuit board arranged parallel to the insertion passage (8) within the housing, which is electrically connected to the plug connector bar (4) and is provided on its surface with a contact field for contacting the carrier element (9), wherein the base plate (3) only is extended by a flat extension (12) in the manner of a lower lip, which extends into a region in front of the mouth of the insertion passage (8) in the insertion direction of the carrier element (9) **characterised in that** the extension (12) has a smaller width in the transverse direction of the housing (2) with respect to the width of the base plate (3), and that the extension (12) includes at least one removal aid (12a) wherein the removal aid (12a) is a lug which is formed on the extension (12) and is constructed on the side of the extension (12).

2. A contacting unit as claimed in Claim 1, **characterised in that** the extension (12) is of plastic and/or metal.

3. A contacting unit as claimed in Claim 1 or 2, **characterised in that** the connection of base plate (3) to the cover plate (6) is effected in the region of the plug connector bar (4).

4. A contacting unit as claimed in any one of Claims 1 to 3, **characterised in that** the insertion passage (8) is continuously open on both sides over its entire length in the insertion direction of the carrier element (9) and that the base plate (3) is connected to the cover plate (6) only in the region of the plug connector bar (4) such that there is a biasing force between the base plate (3.) and the cover plate (6).

5. A contacting unit as claimed in Claims 1 to 4, **characterised in that** the extension (12) is connected to the base plate (3) via a predetermined breaking line (13).

6. A contacting unit as claimed one of Claims 1 to 5, **characterised in that** the extension (12) is connected to the base plate (3) via one or more predetermined breaking points.

7. A contacting unit as claimed in one of Claims 1 to 6, **characterised in that** the extension region constituted by the extension (12) is composed of segments, which are separately separable from the base plate.

8. A contacting unit as claimed in one of Claims 1 to 7, **characterised in that** the extension (12) is provided with openings (18) and/or locking elements.

9. A contacting unit as claimed in Claim 8, **characterised by** the additional accommodation of one or more electrical modules (19), whereby there is an electrical connection (24/25) with the printed circuit board.

## Revendications

1. Unité de contact pour un élément de support en forme de carte pour des sous-ensembles électroniques, en particulier pour des cartes à puce (9) selon ISO 7816, avec un boîtier (2) en forme de carte à insérer, qui possède une plaque de base (3) et une plaque de couverture (6) de même étendue dans le sens transversal, entre lesquelles est formé un canal d'insertion (8) en forme de fente débouchant sur une face d'extrémité du boîtier (2) pour recevoir l'élément de support (9), et qui est doté sur la face d'extrémité opposée à cette face d'extrémité d'une réglette de connecteurs (4) selon la norme PCMCIA, et avec une carte de circuits disposée parallèlement au canal d'insertion (8) dans le boîtier (2), qui est connectée électriquement à la réglette de connecteurs (4) et qui est dotée sur sa surface d'un champ de contact pour la mise en contact avec l'élément de support (9), la plaque de base (3) étant seule prolongée par un rebord (12) en forme de lèvre inférieure qui s'étend, dans le sens de l'insertion de l'élément de support (9), devant l'embouchure du canal d'insertion (8), **caractérisée en ce que** le rebord (12) a dans le sens transversal du boîtier (2) une largeur inférieure à la largeur de la plaque de base (3) et **en ce que** le rebord (12) présente au moins une aide au retrait (12a), laquelle aide au retrait (12a) est une saillie formée au niveau du rebord (12), qui est formée sur le côté du rebord (12).

2. Unité de contact selon la revendication 1, **caractérisée en ce que** le rebord (12) est fait de matière plastique et/ou de métal.

3. Unité de contact selon la revendication 1 ou 2, **caractérisée en ce que** la liaison de la plaque de base (3) à la plaque de couverture (6) est réalisée au niveau de la réglette de connecteurs (4).

4. Unité de contact selon l'une des revendications 1 à 3, **caractérisée en ce que** le canal d'insertion (8) est ouvert sur toute sa longueur des deux côtés dans le sens d'insertion de l'élément de support (9) et **en ce que** la plaque de base (3) et la plaque de couverture (6) sont reliées exclusivement au niveau de la réglette de connecteurs (4), de telle sorte qu'une précontrainte se crée entre la plaque de base (3) et la plaque de couverture (6).

5. Unité de contact selon l'une des revendications 1 à 4, **caractérisée en ce que** le rebord (12) est relié à la plaque de base (3) par l'intermédiaire d'une ligne de rupture (13).

6. Unité de contact selon l'une des revendications 1 à 5, **caractérisée en ce que** le rebord (12) est relié à la plaque de base (3) par l'intermédiaire d'un ou plusieurs points de rupture.

7. Unité de contact selon l'une des revendications 1 à 6, **caractérisée en ce que** la zone d'élargissement formée par le rebord (12) est composée de segments partiels, qui peuvent être détachés séparément de la plaque de base.

8. Unité de contact selon l'une des revendications 1 à 7, **caractérisée en ce que** le rebord (12) est pourvu d'ouvertures (18) et/ou d'éléments d'engagement.

9. Unité de contact selon la revendication 8, **caractérisée en ce qu'**elle comporte un logement supplémentaire pour un ou plusieurs modules électriques (19), avec une liaison électrique (24/25) prévue vers la carte de circuits.
